# EUROPEAN PATENT APPLICATION

(11) **EP 1 605 717 A1**
(43) Date of publication of application: **14.12.2005**
(21) Application number: 05010060.1
(22) Date of filing: 09.05.2005
(51) Int. Cl.: H04Q 7/32

(54) **Updating wireless data using a wireless connection**

(30) Priority: 07.06.2004 US 862940
(71) Applicant: Hewlett-Packard Development Company, L.P., Houston, TX 77070 (US)
(72) Inventor: Vinson, David C., Cupertino, CA 95014 (US); Chen, Yancy, Campbell, CA 95008 (US); Kim, Kyoung I., Sunnyvale, CA 94087 (US)
(74) Representative: Schoppe, Fritz

(57) **Abstract**

Apparatus and methods are provided for updating data on a wireless device. One embodiment of a wireless device includes a processor, a memory in communication with the processor, a wireline access port in communication with the processor and memory, and program instructions stored in memory and executable on the processor. The program instructions include instructions to update data on the wireless device based on a comparison of data read from a computing device connected to the wireline access port with data on the wireless device.

## Description

### Introduction

Wireless devices, such as wireless media receivers and the like, are typically not shipped from the manufacturer such that they can be immediately connected to a wireless network. This is, in part, due to the fact that in order to connect a wireless device to a network, addressing information that is particular to the network to which the device is being added has to be provided to the device. However, in some situations, such as when the wireless network has not been established, it can be difficult to transfer the addressing and/or other information (e.g., firmware and/or software update data) to the device.

For instance, wireless media receivers use software and firmware to interact with devices sending information to the receiver and to play the received information on a device, such as a television or display, connected by a wireline to the media receiver. In operation, the media receiver is typically wirelessly connected to a network in which another network device, such as a server or a personal computer sends information to be played on the device connected to the media receiver. However, when setting up the media receiver or when updating the software or firmware in the media receiver, it may be difficult to send the data wirelessly, especially in cases where the network has not been established yet. Difficulties can be attributed to things such as: slow transfer data rates for wireless communications, the lack of a wireless connection, errors in the transmission of large amounts of data via wireless transmission, and the like.

Further, devices like media receivers also typically don't have slots for receiving memory media, such as floppy disks, memory cards, memory sticks, and the like. In this way, it is difficult to set up or update the software and/or firmware on the media receiver because, since the updates do not reside on the media receiver, the updates have to be transferred via the wireless connection.

### Brief Description of the Drawings

Figure 1 illustrates a wireless media system.
Figure 2 illustrates another wireless media system.
Figure 3A illustrates an embodiment for performing a firmware update using a wireline connection.
Figure 3B illustrates another embodiment for performing a firmware update using a wireline connection.
Figure 4 illustrates a method embodiment for performing firmware updates.
Figure 5 illustrates another method embodiment for performing firmware updates.

### Detailed Description

Embodiments of the present invention include program instructions which can execute to perform a firmware and/or software data update to a wireless device, such as a media receiver, using a computing device connected via wireline connection thereto. Although the device to be updated is a wireless capable device, in the embodiments of the present invention, no wireless connection to a computer for downloading data to the wireless device is involved.

Rather, embodiments facilitate an efficient and reliable serviceability technique for providing data updates in the field, factory, and/or user's home once the updated data is available for transfer from a computing device. Embodiments of the present invention also allow for an operator, using the computing device to provide the update data to a wireless device, to be proximate to both devices during the setup and/or updating process.

Embodiments can allow for all update operations to be performed locally (i.e., without the use of a network) between a computing device and a wireless device, such as from a computing device to a media receiver via a wireline connection. In this way, the computing device does not have to be networked to wireless device in order to transfer update data.

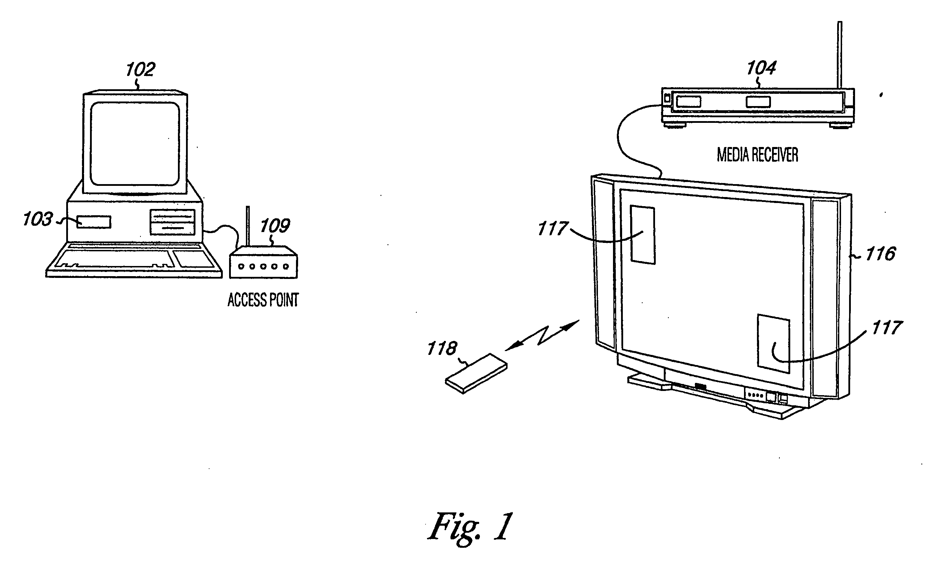

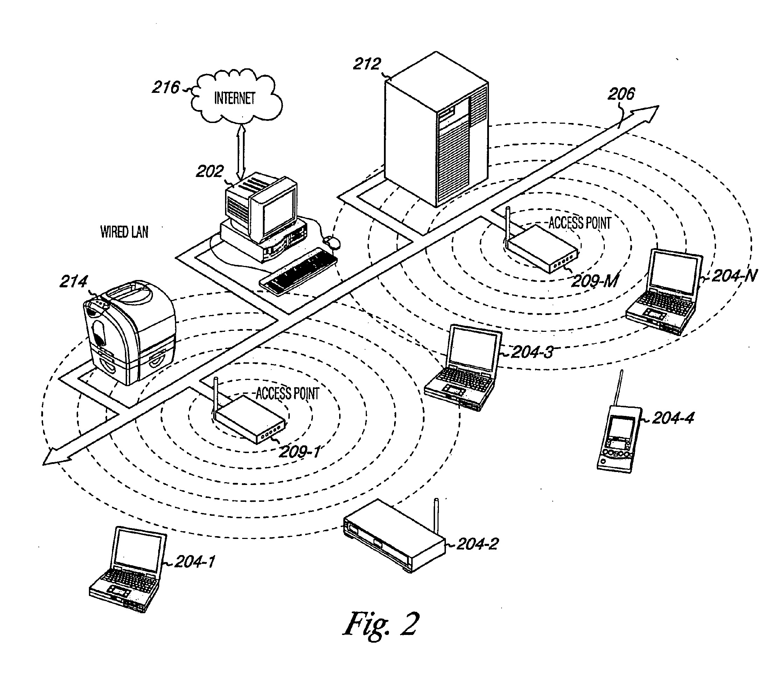

Figures 1 and 2 illustrate examples of typical networks having a number of devices within the network. Figure 1 illustrates an example of a wireless network of which a wireless device, e.g., media receiver, is a part. As shown in Figure 1, a wireless device 104 can include, for example, a digital media receiver connected to an entertainment display 116 such as a standard television set, flat screen television, high definition TV (HDTV), and/or plasma display which can display various graphics 117.

Wireless devices can also be used with an audio player such as a stereo or surround sound system, among others. These audio and video systems can be operated by a remote control 118.

In the embodiment of Figure 1, a computing device 102 is illustrated including memory media reader 103. The wireless device 104 is illustrated as not having memory media reader, but could, in some embodiments, additionally include a memory media reader. As described above, memory media includes storage mediums such as, but not limited to, RAM, ROM, and Flash memory in formats, such as hard drives, floppy discs, memory cards, memory keys, and the like.

According to various embodiments, the media receiver 104 includes program instructions which can be stored in memory and executed by a processor thereon to read information, such as update data like an updated firmware version, from a computing device, e.g., 102.

However, as discussed above, in some situations, if the wireless network has not been established, or is otherwise unavailable or unusable, the transmission of the information from the computing device 102 to the wireless device 104 cannot be accomplished. Embodiments of the present invention can provide a manner in which the data can be transferred in such situations as will be described in more detail below.

Figure 2 illustrates a network infrastructure including wireless access points, e.g., 209-1, ..., 209-M. Figure 2 illustrates a computing device 202 coupled over a LAN and/or WAN to a number of network devices using both wireline and wireless connections. In Figure 2, multiple wireless devices 204-1, 204-2, 204-3, 204-4, ..., 204-N, are illustrated connected via wireless access points, 209-1 and 209-2, to the LAN and the computing device 202.

The designators "N" and "M" are used to indicate that a number of access points and/or wireless devices can be attached to the network 200. The number that N represents can be the same or different from the number represented by M.

The wireless devices, 204-1, 204-2, 204-3, 204-4, ..., 204-N, can include a number and variety of wireless devices, as the same have been described above. One of ordinary skill in the art will appreciate that the wireless devices, 204-1, 204-2, 204-3, 204-4, ..., 204-N, can connect to the access points, 209-1, .., 209-M, according to a number of different wireless protocols, e.g., via RF, 802.11 standards, and Bluetooth, among others.

The computing device 202 is illustrated as connected to a server/database 212 over a wireline network connection 206. Those of ordinary skill in the art will understand that a wireline connection can include connections such as USB, Ethernet, serial, parallel, and other such wired connection types.

A peripheral 214, such as a multifunction scanner, copier, and facsimile device is also shown connected to the computing device 202 in a wireline connective manner. Figure 2 further illustrates that the computing device 202 may have access to the Internet 216, e.g., in a manner known to one of ordinary skill in the art.

In an embodiment of a network, such as that shown in Figure 2, the device connected by a wireline connection to the network, can still be accessible when the network has not yet been established or is inaccessible as discussed above. However, the wireless devices cannot be accessed if the wireless network is not able to transfer data since their connection to the network is wireless. Embodiments of the present invention can provide a manner in which the data can be transferred in such situations as will be described in more detail below.

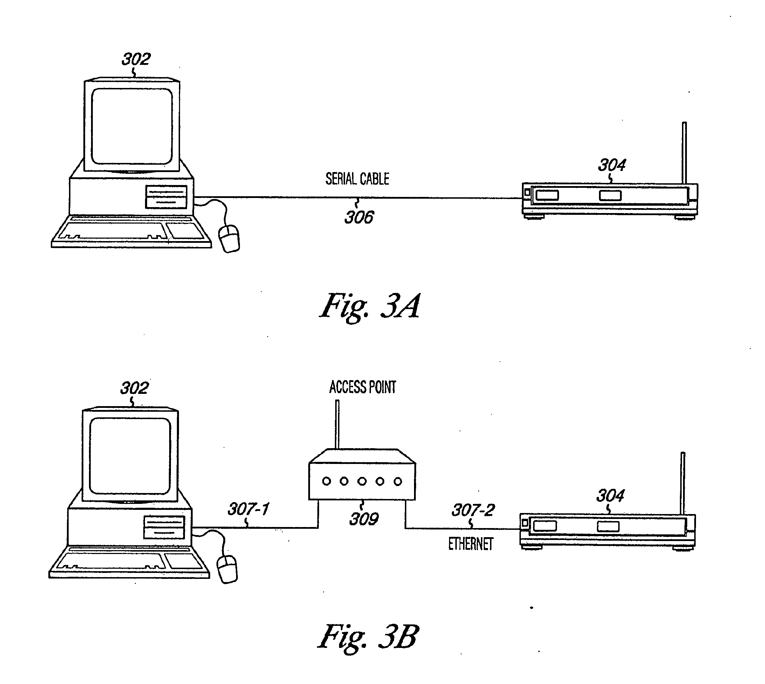

For example, Figure 3A illustrates a wireline connection between a computing device 302 and a media receiver 304. As one of ordinary skill in the art will appreciate upon reading this disclosure, a computing device 302 includes processor and memory resources. Similarly, a media receiver 302 can include processor and memory resources sizeable as suited to a particular implementation, as the same will be known and understood to one of ordinary skill in the art.

Additionally, the program instructions can execute to select whether to update data in the memory of the media receiver 304, based on a comparison of the data on the computing device 302 to the data in the memory of the media receiver 304. For example, program embodiments can be executed to search a firmware file and check its version from the computing device 302 or from the wireless device, e.g., media receiver 304, as the same will be known and understood to one of ordinary skill in the art.

Program embodiments can execute to compare the data on the computing device 302 with the data on the media receiver 304. For example, program instructions can look to the creation date of the data, the last modification date, a data set version identifier, such as a firmware version number, and other such identifiers as are known to those of ordinary skill in the art.

In various embodiments, program instructions can execute to provide a user with the selectability of whether to update the data on the media receiver 304 with the data on the computing device 302 based on a result presented to the user and based upon input instructions from the user in response thereto.

Computing and media receivers are widely used in consumer and commercial environments. Such devices generally include a user interface that is responsive to user input in complement to the processor and memory resources. A user interface can be provided in the form of a touch screen display, a keyboard and/or keypad, and a pointing device such as a mouse or stylus. Memory can include ROM, RAM, flash memory, and/or some other type of nonvolatile and writeable memory such as battery-backed persistent storage, e.g., a hard disk drive that stores programs and data. An operating system such as Windows, Unix, and/or Linux, etc. is also stored in memory.

Further, a number of other program applications, such as computer games or an office suite, can also be stored in memory. Computing devices may include a network interface application that communicates with a server over a network. The network interface application may be an Internet interface that communicates with the Internet using HTTP or other protocols.

Computing device 302 is a device that can execute computer executable instructions. For example, computing devices include desktop personal computers (PCs), workstations and/or laptops, etc. As used herein, wireless devices 304 include media players, media receivers, digital cameras, MP3 players, personal digital assistants (PDAs), television sets (e.g., flat screen televisions, high definition TVs (HDTVs), digital televisions with built-in computing device readers, HDTV Tuner set-top boxes with internal and/or external computing device readers, and/or plasma displays), digital versatile disk (DVD) players, and/or cell phones, etc. All of these examples can include a wired and/or wireless network interface as the same will be known and understood by one of ordinary skill in the art.

Figure 3A illustrates one approach to providing a data update to a wireless device 304 in such a way that a wireless network is not used. As shown in Figure 3A, the computing device 302 is connected to the wireless device 304 via a wireline connection, e.g., a serial cable 306. As stated above, the connection can be made by wireline connections such as USB, Ethernet, serial, parallel, and other such wired connection types. As shown in Figure 3A, a software and/or firmware update may be provided, for example, on a computing device 302 from a portable storage media such as a floppy disk drive, CDROM, or hard disk. The update can also be downloaded from a commonly accessible storage location such as a bulletin board or Internet web site to a local storage device.

In Figure 3A, the computing device 302 can employ a software interface application to download the update information, e.g., an initial and/or subsequent firmware and/or software installation, from the computing device 302 through the wireline connection 306 to a memory on the wireless device 304. As one will appreciate, this process typically involves the use of a computing device software utility and configuration and setup for both the hardware and software. Also, in addition to involving the use of a wireline connection 306 this process may involve bringing the wireless device 304 to a location near the computing device 302.

This process can involve the use of a computing device software utility as well as configuration and setup for both the hardware and software to enter items such as client name, SSID, communication channel, client IP address, Subnet mask address, a media access control address (MAC address), encryption keys, and the like.

Figure 3B illustrates a wireline connection between a computing device 302 and a media receiver 304 through a network gateway/hub 308. As one of ordinary skill in the art will appreciate network devices can be connected to one another and/or to other networks via routers, hubs, and/or switches as the same are known and understood by one of ordinary skill in the art, to form a local and/or wide area network (LAN/WAN). As such, different devices, including peripherals and media receivers can be connected to share and communicate data. In Figure 3B, the computing device 302 is illustrated connected via a wireline connection, e.g., an Ethernet connection 307-1 and 307-2, to the media receiver 304 through an access point 309.

As in Figure 3A, the computing device 302 in Figure 3B can employ a software interface application to download the update information from the computing device 302 through the wireline network connection 306 to a memory on the media receiver 304. Again, this process typically involves the use of a computing device software utility as well as configuration and setup for both the hardware and software. For example, the software configuration may include entering a baud rate, stop bit, and/or IP address, among other elements, for performing the data download from the computing device 302 through the wireline network connection 307-1 and 307-2 to a memory on the media receiver 304.

Additionally, in various embodiments, program instructions can be provided to insert the data to the wireless device, such as device 304, in a manner that is transparent to the user. For example, in many instances such as during the set up of a new device, the user does not understand how to set up the device. The user is, in some cases, not familiar with the terms used to describe the information to be added, nor do they understand how to find the information or where the information is supposed to be placed within the wireless device. In such cases, program embodiments can provide program instructions that can harvest the information on the computing device that is to be placed on the wireless device in order to properly configure the device for use with the wireless network. Program instructions can also be used to properly place harvested or user provided information onto the wireless device. Such program instructions can be provided on a computing device and/or on the wireless device.

The update data can be downloaded to the computing device over a network connection as described in Figures 3A-3C. As one of ordinary skill in the art will appreciate it is becoming popular for users to download firmware updates from the Internet. For example, an Internet browser can be used to access a web server having a firmware update. A given update can be selected by clicking a link which can then execute instructions along with the browser to download and install the update data to memory such as a hard disk of a personal computer. This information can be downloaded to the computing device and then transferred to the wireless device.

Those of ordinary skill in the art will understand that the communication devices, servers, and other computing devices discussed herein, such as servers or computing devices in a serving network or computing devices not connected to a network can include one or more processors and memory therein for the storing and execution of program instructions.

Media receivers, such as digital cameras, MP3 players, PDAs, digital media players, and the like, can include memory media readers designed to accommodate memory media of various form factors and formats as well. Other media receivers such as digital media players may be connected to a display screen such as a standard television set, flat screen television, high definition TV (HDTV), and/or plasma display. For example, Figure 1 illustrates a media player 104-N connected to display 116.

As was illustrated in connection with Figure 1, a display can be used to present various graphics 117 and can be operated by a remote control 118. Media receivers and other such wireless device functionalities can also be integrated into devices such as televisions, displays, digital video recorders, audio devices, picture viewers, cameras, and other such devices that can wirelessly receive media.

Likewise, as one of ordinary skill in the art will appreciate, a media receiver such as a media player may also be operated by a remote control, RF device. The media receiver can also include other input mechanisms such as a touch screen thereon, input buttons, function keys, etc. The examples given herein are not intended to be limiting.

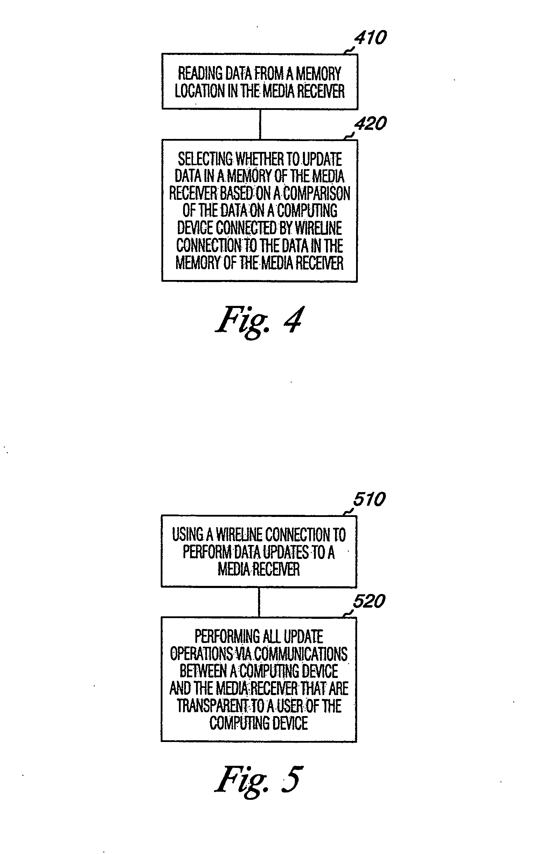

Figures 4 and 5 illustrate various method embodiments for updating data on a wireless device. As one of ordinary skill in the art will understand, the embodiments can be performed by software/firmware (e.g., computer executable instructions) operable on the devices shown herein or otherwise. The embodiments of the invention, however, are not limited to any particular operating environment or to software written in a particular programming language. Software, application modules, and/or computer executable instructions, suitable for carrying out embodiments of the present invention, can be resident in one or more devices or locations or in several and even many locations.

Embodiments of the invention can also reside on various forms of computer readable mediums. Those of ordinary skill in the art will understand that a computer readable medium can be any medium that contains information that is readable by a computer. Forms of computer readable mediums can, for example, include volatile and/or non-volatile memory stored on fixed or removable mediums, such as hard drives, disks, memory sticks, memory cards, memory keys, and the like, among others.

Unless explicitly stated, the method embodiments described herein are not constrained to a particular order or sequence. Additionally, some of the described method embodiments or elements thereof can occur or be performed at the same point in time.

Figure 4 illustrates one method embodiment for updating data on a media receiver. In block 410, the method of Figure 4 includes reading data from a memory location in the media receiver. The method also includes selecting whether to update data in a memory of the media receiver based on a comparison of the data on a computing device connected by wireline connection to the data in the memory of the media receiver, at block 420.

In various embodiments, the method can also include displaying a confirmation that the update has been completed on a display of the computing device. In this way, the receiver does not have to be connected to the television in order for the confirmation to be viewed by the individual performing the setup of the receiver.

The method can also include selecting whether to update the data in the memory of the media receiver based on user input to the computing device. Initiation of an update of the data on the media receiver can be based on such user input to the computing device. For example, the user can check to see whether the data should be updated based upon the version that is currently on the receiver.

In various embodiments, the method can also include downloading a firmware update for the media receiver to a hard disk of a computing device. The firmware update can then be transferred from the hard disk in the computing device to the media receiver via a wireline connection between the computing device and the media receiver.

Figure 5 illustrates another method embodiment for updating data on a media receiver. In block 510, the method of Figure 5 includes using a wireline connection to perform data updates to a media receiver. The method also includes performing all update operations via communications between a computing device and the media receiver that are transparent to a user of the computing device, in block 520. Performing all update operations can include operations such as querying the media receiver for identification information, querying the media receiver for firmware version information, transferring wireless network setup information to the media receiver, placing wireless network setup information into memory, and confirming that a setup procedure has been completed.

The media receiver can execute instructions to search for a "Data File" in the computing device and can execute instructions to check its version. Program embodiments are provided to a memory of the media receiver that execute to check if a given data version as contained on the computing device is newer or more recent than a data version resident in a memory on the media receiver. One of ordinary skill in the art will appreciate upon reading this disclosure the manner in which program instructions can be written and executed to retrieve and compare a data version, and information pertaining thereto, to a firmware version retrieved from or resident on another memory such as a memory in the media receiver.

Program instructions can execute to display a confirm message on a display as described above. For example, when the program instruction's execution and comparison determines that the data version present on the computing device is newer than the data version resident on the media receiver, a prompt can be provided to the user on the display such as "Do you want to update?" with additional options selectable such as "OK/Cancel".

Alternatively, when the program instruction's execution and comparison determines that the data version present on the computing device is older than the data version resident on the media receiver, a display warning message and/or prompt can be provided to the user on the display such as "Current data version (e.g., resident on the media receiver) is newer than file" (e.g., the data version on the computing device). Again, additionally options selectable by the user can be present such as "Do you still want to update?" and "OK/Cancel" options.

As described above, a user can input instructions in response to these prompts by using a RF remote control device, input to a keypad on the media receiver, and/or via a touch screen display, among other such user interactive components. As one of ordinary skill in the art will further appreciate, the prompts themselves can be additionally and/or exclusively presented to a user in an audio format via a speaker and a user may input response instructions via audible commands using voice recognition software and a microphone present on a given media receiver. Embodiments are not limited to these examples.

If a user inputs instructions to cancel the updating process, then the program instructions can execute to stop and/or not to proceed with updating the data on the computing device to the media receiver. Alternatively, if a user inputs instructions selecting "OK", e.g., to proceed, then the program instructions can execute to verify the data file, e.g., perform a checksum routine as the same will be known and understood by one of ordinary skill in the art, and will execute to initiate and carry though the update of the data on the media receiver.

As mentioned above, and as one of ordinary skill in the art will appreciate upon reading this disclosure, various data update embodiments described herein can be transparent to the user in that the user does not have to interact with software utilities and setup configurations for the setup and/or update of software or hardware. The data update is reliable because the operation has been performed via a wireline connection to the wireless device. Hence, the updates described herein provide an added degree of serviceability in the field, e.g., home environment, retail outlet, and/or factory setting, etc.

As described above, program embodiments are provided to a wireless device, e.g., storable on a memory of the wireless device, that can be executed by a processor on the wireless device to read data from a computing device. The program instructions are executed by the processor to select whether to update data on the wireless device based on a comparison of the data on the computing device to the data on the wireless device, e.g., digital media receiver.

The program instructions further execute to afford a user the selectable option, e.g., a confirmation, of whether to proceed with the data update based a result of the comparison being presented to the user. The user can input instructions via a touch screen display and/or input keys on the wireless device as well as via an RF remote control device. Embodiments are not limited to these examples.

Although specific embodiments have been illustrated and described herein, those of ordinary skill in the art will appreciate that any arrangement calculated to achieve the same techniques can be substituted for the specific embodiments shown. This disclosure is intended to cover adaptations or variations of various embodiments of the invention. It is to be understood that the above description has been made in an illustrative fashion, and not a restrictive one.

Combination of the above embodiments, and other embodiments not specifically described herein will be apparent to those of ordinary skill in the art upon reviewing the above description. The scope of the various embodiments of the invention includes various other applications in which the above structures and methods are used. Therefore, the scope of various embodiments of the invention should be determined with reference to the appended claims, along with the full range of equivalents to which such claims are entitled.

In the foregoing Detailed Description, various features are grouped together in a single embodiment for the purpose of streamlining the disclosure. This method of disclosure is not to be interpreted as reflecting an intention that the embodiments of the invention require more features than are expressly recited in each claim. Rather, as the following claims reflect, inventive subject matter lies in less than all features of a single disclosed embodiment. Thus, the following claims are hereby incorporated into the Detailed Description, with each claim standing on its own as a separate embodiment.

## Claims

1. A wireless device for use in a wireless network, comprising:
a processor;
a memory in communication with the processor;
a wireline access port in communication with the processor and memory; and
program instructions stored in memory and executable on the processor to update data on the wireless device based on a comparison of data read from a computing device connected to the wireline access port with data on the wireless device.

2. The wireless device of claim 1, wherein the data update includes adding a parameter to the data of the wireless device to allow connection to a wireless network.

3. The wireless device of claim 2, wherein the parameter includes a parameter selected from the group of:
an IP address;
a subnet mask;
an encryption key;
a media access control address;
a client name;
a channel; and
a router/AP SSID.

4. The wireless device of claim 1, wherein the program instructions are executable to allow for the setup of the wireless device before a wireless network has been established.

5. The wireless device of claim 1, wherein the data update includes data for updating firmware on the wireless device.

6. The wireless device of claim 5, wherein the data for updating firmware includes a firmware program instruction.

7. A computing system, comprising:
a first device including;
a memory having data stored therein;
a wireline access port;
program instructions executable to transfer data from the memory through a wireline connection to a device for use with a wireless network;
the device for use with a wireless network including;
a memory having data stored therein;
a wireline access port; and
program instructions executable to update the data on the media receiver with the data provided from the first device connected by a wireline connected between the wireline access ports on each device.

8. The computing system of claim 7, wherein further including a wireless access point connected by wireline between the first device and the device for use in a wireless network.

9. The computing system of claim 7, wherein the first device includes program instructions to:
identify data to be used in setting up the device for use with a wireless network to access a wireless network; and
transfer the data to the device for use with a wireless network.

10. The computing system of claim 9, wherein the first device includes program instructions to query the device for use with a wireless network to locate and obtain device identification information.

11. The computing system of claim 10, wherein the device for use with a wireless network includes program instructions executable to transfer device identification information to the first device.

12. A media receiver, comprising:
a processor;
a memory in communication with the processor, the memory having data stored therein;
a wireline access port in communication with the processor and memory; and
means for updating data on the media receiver with data provided from a computing device connected to the wireline access port.

13. The media receiver of claim 12, wherein the access port receives a USB connection.

14. The media receiver of claim 12, wherein the access port receives a serial connection.

15. The media receiver of claim 12, wherein the access port receives a parallel connection.

16. The media receiver of claim 12, wherein the access port receives an Ethernet connection.

17. The media receiver of claim 12, wherein the means for updating data includes program instructions can execute to update a firmware version on the media receiver without using a network connection.

18. The media receiver of claim 12, wherein the means for updating data includes program instructions can execute to update a firmware version on the media receiver without using a wireless network connection.

19. The media receiver of claim 12, wherein the means includes program instructions stored in memory and executable by the processor to query and obtain update data from a computing device when the computing device is connected to the media receiver.

20. A method for updating data on a media receiver, comprising:
reading data from a memory location in the media receiver; and
selecting whether to update data in a memory of the media receiver based on a comparison of the data on a computing device connected by wireline connection to the data in the memory of the media receiver.

21. The method of claim 20, further including displaying a confirmation that the update has been completed on a display of the computing device.

22. The method of claim 20, further including selecting whether to update the data in the memory of the media receiver based on user input to the computing device.

23. A computer readable medium having instructions for causing a device to perform a method, comprising:
reading data from a memory location in a media receiver; and
selecting whether to update data on a media receiver based on a comparison of the data on a computing device connected by wireline connection to the data on the media receiver.

24. The computer readable medium of claim 23, the method further including:
downloading a firmware update for the media receiver to a hard disk of a computing device; and
transferring the firmware update from the hard disk in the computing device to the media receiver via a wireline connection between the computing device and the media receiver.

25. The medium of claim 23, wherein the method further includes displaying a result from comparing the data on the computing device connected by wireline connection to the data on the media receiver.

26. The medium of claim 23, wherein the method further includes initiating an update of the data on the media receiver based on user input to the computing device.

27. A method for updating data on a media receiver, comprising:
using a wireline connection to perform data updates to a media receiver; and
performing all update operations via communications between a computing device and the media receiver that are transparent to a user of the computing device.

28. The method of claim 27, wherein performing all update operations includes operations selected from the group of:
querying the media receiver for identification information;
querying the media receiver for firmware version information;
transferring wireless network setup information to the media receiver;
placing wireless network setup information into memory; and
confirming that a setup procedure has been completed.
